# EUROPEAN PATENT APPLICATION

(11) **EP 4 618 650 A1**
(43) Date of publication of application: **17.09.2025**
(21) Application number: 23910579.4
(22) Date of filing: 26.12.2023
(51) Int. Cl.: H04W 72/00

(54) **CONFIGURED GRANT PROCESSING METHOD, APPARATUS, AND COMPUTER-READABLE STORAGE MEDIUM**

(30) Priority: 30.12.2022 CN 202211743365
(71) Applicant: Huawei Technologies Co., Ltd., Shenzhen, Guangdong 518129 (CN)
(72) Inventor: CHEN, Erkai, Shenzhen, Guangdong 518129 (CN); XU, Rui, Shenzhen, Guangdong 518129 (CN); QIN, Yi, Shenzhen, Guangdong 518129 (CN); CAO, Youlong, Shenzhen, Guangdong 518129 (CN)
(74) Representative: Goddar, Heinz J.
(86) International application number: PCT/CN2023/141860
(87) International publication number: WO 2024/140655

(57) **Abstract**

A configured grant processing method, an apparatus, and a computer-readable storage medium are provided. The configured grant processing method in this application includes: obtaining configured grant CG information, where the CG information is used for configuring a physical uplink shared channel PUSCH of a first CG; sending indication information, where the indication information indicates a first time period; and skipping data transmission on the PUSCH of the first CG within the first time period. In this application, when determining that uplink data transmission does not need to be performed through a PUSCH of a CG within the first time period, a terminal may feed back the first time period to a base station, to help the base station allocate and use PUSCH resources within the first time period, thereby wasting fewer communication resources and improving utilization of the communication resources.

## Description

This application claims priority to Chinese Patent Application No. 202211743365.4, filed with the China National Intellectual Property Administration on December 30, 2022 and entitled "CONFIGURED GRANT PROCESSING METHOD, APPARATUS, AND COMPUTER-READABLE STORAGE MEDIUM", which is incorporated herein by reference in its entirety.

### TECHNICAL FIELD

This application relates to the field of communication technologies, and in particular, to a configured grant processing method, a communication apparatus, and a computer-readable storage medium.

### BACKGROUND

With continuous development of communication technologies, data transmission latency is continuously reduced, transmission capacity is increasingly increased, and some multimedia services with high requirements on real-time performance and data capacity gradually emerge, such as video transmission, cloud gaming (cloud gaming, CG), and extended reality (extended reality, XR). XR includes virtual reality (virtual reality, VR) and augmented reality (augmented reality, AR).

Currently, for a multimedia service with high requirements on real-time performance and data capacity, uplink service data transmission is mainly performed through a physical uplink shared channel (physical uplink shared channel, PUSCH) configured by using a configured grant (configured grant, CG) mechanism. To increase an uplink service data transmission rate, denser PUSCHs may be configured, for example, duration of each CG periodicity is shortened, a plurality of PUSCHs are configured in a unit periodicity, or a plurality of CGs are configured.

During actual application, an amount of service data on a terminal usually changes dynamically. In a high-density PUSCH communication condition, if an amount of uplink service data decreases, fewer PUSCHs are needed to perform service data transmission. Consequently, a large quantity of PUSCHs are not used, causing a waste of network resources.

### SUMMARY

This application provides a communication method, an apparatus, and a computer-readable storage medium, to reduce a waste of communication resources and improve utilization of the communication resources.

According to a first aspect, this application provides a communication method. The method may be performed by a terminal, or may be performed by a component (for example, a processor, a chip, or a chip system) of the terminal, or may be implemented by a logical node, a logical module, or software that can implement all or some functions of the terminal. The method includes:
obtaining CG information, where the CG information is used for configuring a PUSCH of a first CG;
sending indication information, where the indication information indicates a first time period; and
skipping use of the PUSCH of the first CG within the first time period, that is, skipping uplink data transmission through the PUSCH on the first CG.

In this application, when determining that uplink data transmission does not need to be performed through a PUSCH of a CG within the first time period, the terminal may feed back the first time period to a base station, to help the base station allocate and use PUSCH resources within the first time period, thereby reducing a waste of communication resources and improving utilization of the communication resources.

Optionally, within a time period other than the first time period, uplink data transmission may still be performed through the PUSCH of the first CG.

Optionally, there may be one or more first CGs. This is not limited in this application. According to another aspect, to meet different data transmission amount requirements, there may be one or more PUSCHs in each periodicity of the first CG. This is not limited in this application.

Optionally, the CG information indicates information such as a time domain resource, a frequency domain resource, and a periodicity of the first CG.

Based on the first aspect, in an optional implementation, the indication information in this application indicates duration of the first time period. However, when receiving the indication information, the base station may determine, when time domain currently used by the terminal device ends, that the duration of the first time period indicated by the indication information starts to take effect, so that an information length of the indication information is shortened, thereby improving efficiency of sending the indication information.

Based on the first aspect, in an optional implementation, in addition to indicating the duration of the first time period, the indication information in this application further indicates a start time of the first time period. When receiving the indication information, the base station needs to wait until the start time indicated by the indication information arrives, and then determines that the duration of the first time period indicated by the indication information starts to take effect, so that the first time period indicated by the indication information is more accurate and more flexible.

Based on the first aspect, in an optional implementation, the indication information in this application indicates the first CG. The base station may configure one or more CGs for the terminal. When the base station configures a plurality of CGs for the terminal, the terminal may want to skip uplink data transmission of only some of the CGs (that is, the first CG in this application) within the first time period. Therefore, the indication information sent by the terminal may carry index information indicating the first CG. Therefore, after receiving the indication information, the base station learns that the terminal does not need to occupy, within the first time period, the PUSCH on the first CG to perform uplink data transmission, and the terminal still needs to use a PUSCH on a CG, other than the first CG, that is configured by the base station for the terminal. Therefore, the terminal can flexibly and freely select a CG that needs to be skipped, to improve flexibility of the solution.

Based on the first aspect, in an optional implementation, first configuration information corresponding to the first CG is obtained, where the first configuration information configures that the PUSCH of the first CG is allowed to be skipped. Specifically, the base station may first configure whether a CG is allowed to be skipped, and the terminal can skip a PUSCH on the CG within the first time period only when the CG is allowed to be skipped, to prevent a PUSCH used for some high-priority service data from being mistakenly skipped by the terminal, thereby avoiding affecting service running.

Based on the first aspect, in an optional implementation, first response information is obtained, where the first response information indicates that the PUSCH of the first CG is allowed to be skipped within the first time period. Therefore, before selecting to skip the PUSCH of the first CG, the terminal first receives a response acknowledgment from the base station, so that behavior of the terminal can be consistent with behavior of the base station, to ensure that a skipped PUSCH resource can be recycled by the base station.

Based on the first aspect, in an optional implementation, in addition to being used for configuring the PUSCH of the first CG, the obtained CG information is further used for configuring a PUSCH of a second CG. Therefore, the PUSCH on the first CG is skipped within the first time period, that is, only some CGs configured by the terminal are skipped, where the PUSCH on the second CG is not skipped. Therefore, data transmission may still be performed on the PUSCH of the second CG within the first time period. Some CGs may be selected to be skipped. Therefore, when some PUSCH resources are released, another PUSCH is still reserved for data transmission, to ensure normal service running.

Based on the first aspect, in an optional implementation, second configuration information corresponding to the second CG is obtained, where the first configuration information configures that the PUSCH of the second CG is not allowed to be skipped. Specifically, the base station may first configure whether a CG is allowed to be skipped. For a CG that is not allowed to be skipped, the terminal cannot skip the CG, to prevent a PUSCH used for some high-priority service data from being mistakenly skipped by the terminal, thereby avoiding affecting service running.

Based on the first aspect, in an optional implementation, the indication information sent by the terminal is carried in uplink control information (uplink control information, UCI) or a medium access control (medium access control, MAC) control element (control element, CE), so that an existing communication protocol does not need to be extended or modified, thereby improving efficiency of sending the indication information by the terminal.

According to a second aspect, this application provides a communication method. The method may be performed by a base station, or may be performed by a component (for example, a processor, a chip, or a chip system) of the base station, or may be implemented by a logical node, a logical module, or software that can implement all or some functions of the base station. The method includes:
sending configured grant CG information to a terminal, where the CG information is used for configuring a physical uplink shared channel PUSCH of a first CG;
receiving indication information from the terminal, where the indication information indicates a first time period; and
not receiving data from the terminal on the PUSCH of the first CG within the first time period (skipping receiving the data from the terminal on the PUSCH of the first CG within the first time period).

Based on the second aspect, in an optional implementation, the indication information indicates duration of the first time period.

Based on the second aspect, in an optional implementation, the indication information further indicates a start time of the first time period.

Based on the second aspect, in an optional implementation, the indication information indicates the first CG.

Based on the second aspect, in a possible implementation, the method further includes:
sending first configuration information, where the first configuration information configures that the PUSCH of the first CG is allowed to be skipped.

Based on the second aspect, in a possible implementation, the method further includes:
sending first response information, where the first response information indicates that the PUSCH of the first CG is allowed to be skipped within the first time period. Therefore, before selecting to skip the PUSCH of the first CG, the terminal first receives a response acknowledgment from the base station, so that behavior of the terminal can be consistent with behavior of the base station, to ensure that a skipped PUSCH resource can be recycled by the base station.

Based on the second aspect, in an optional implementation, the CG information is further used for configuring a PUSCH of a second CG, and the method further includes:
receiving data from the terminal on the PUSCH of the second CG within the first time period.

Based on the second aspect, in a possible implementation, the method further includes:
sending second configuration information, where the second configuration information configures that the PUSCH of the second CG is not allowed to be skipped.

Content such as information exchange and an execution process of the embodiment shown in this aspect is based on the same concept as the embodiment shown in the first aspect. Therefore, for descriptions of beneficial effect shown in this aspect, refer to the first aspect. Details are not described herein again.

According to a third aspect, an embodiment of this application provides an apparatus. The apparatus may implement the method according to any one of the first aspect or the possible implementations of the first aspect. The apparatus includes a corresponding unit or module configured to perform the method. The unit or module included in the apparatus can be implemented by software and/or hardware. The apparatus may be, for example, a terminal, or may be a chip, a chip system, a processor, or the like that supports the terminal in implementing the method, or may be a logical node, a logical module, or software that can implement all or some functions of the terminal.

According to a fourth aspect, an embodiment of this application provides an apparatus. The apparatus may implement the method according to any one of the second aspect or the possible implementations of the second aspect. The apparatus includes a corresponding unit or module configured to perform the method. The unit or module included in the apparatus can be implemented by software and/or hardware. The apparatus may be, for example, a base station, or may be a chip, a chip system, a processor, or the like that supports the base station in implementing the method, or may be a logical node, a logical module, or software that can implement all or some functions of the base station.

According to a fifth aspect, an embodiment of this application provides an apparatus, including a processor. The processor is coupled to a memory. The memory is configured to store instructions. When the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that, for beneficial effects of the features corresponding to the first aspect and the second aspect in the third aspect to the thirteenth aspect, refer to related descriptions in the first aspect and the second aspect. Details are not described again.

### BRIEF DESCRIPTION OF DRAWINGS

FIG. 1 is a diagram of a communication network architecture in an XR technology;
FIG. 2 is a diagram of a scenario of periodical transmission of a video frame;
FIG. 3 is a diagram of a scenario of configuring a PUSCH by using a CG mechanism;
FIG. 4 is a diagram of a scenario in which denser PUSCHs are configured;
FIG. 5 is a diagram of another scenario in which denser PUSCHs are configured;
FIG. 6 is a diagram of another scenario in which denser PUSCHs are configured;
FIG. 7 is a diagram of a possible and non-limiting system architecture of a configured grant processing method according to this application;
FIG. 8 is a schematic flowchart of a configured grant processing method according to this application;
FIG. 9 is a diagram of a scenario in which a configured grant processing method is applied to a CG with a short periodicity according to this application;
FIG. 10 is a diagram of a scenario in which a configured grant processing method is applied to a plurality of CGs according to this application;
FIG. 11 is a diagram of a scenario in which a configured grant processing method is applied to a plurality of PUSCHs configured within a periodicity according to this application;
FIG. 12 is a diagram of a structure of a communication apparatus according to an embodiment of this application;
FIG. 13 is a diagram of another structure of a communication apparatus according to an embodiment of this application; and
FIG. 14 is a diagram of a structure of a communication apparatus according to an embodiment of this application.

### DESCRIPTION OF EMBODIMENTS

Embodiments of this application provide a configured grant processing method, an apparatus, and a computer-readable storage medium, to reduce a waste of communication resources and improve utilization of the communication resources.

The following describes embodiments of this application with reference to the accompanying drawings in embodiments of this application. Terms used in implementations of this application are only used to explain specific embodiments of this application, but are not intended to limit this application. A person of ordinary skill in the art may learn that, with development of technologies and emergence of a new scenario, the technical solutions provided in embodiments of this application are also applicable to a similar technical problem.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

In the specification, claims, and accompanying drawings of this application, the terms "first", "second", "third", "fourth", and so on (if any) are intended to distinguish between similar objects but do not necessarily indicate a specific order or sequence. Data used in this way is exchangeable where appropriate, so that embodiments of this application described herein can be implemented in an order different from the order shown or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

With continuous development of communication technologies, data transmission latency is continuously reduced, transmission capacity is increasingly increased, and some multimedia services with high requirements on real-time performance and data capacity gradually emerge, such as video transmission, cloud gaming (cloud gaming, CG), and extended reality (extended reality, XR). XR includes virtual reality (virtual reality, VR) and augmented reality (augmented reality, AR).

As a communication transmission rate rapidly increases, real-time video transmission services (including the foregoing services like cloud gaming, VR, and AR) have gradually become one of core services in a current network. With continuous progress and improvement of XR technologies, related industries have also developed vigorously. Nowadays, as one of the XR technologies, a VR technology has been widely used in various fields that are closely related to people's production and life, such as education, entertainment, medical care, environmental protection, transportation, and public health. Compared with a conventional video service, VR has multiple viewing angles, strong interaction, and other advantages, providing a user with new visual experience. VR integrates a plurality of technologies such as computer graphics and multimedia to simulate visual, auditory, tactile, and other functions of human sensory organs, and can implement real-time interaction through languages and gestures to enhance immersion. In the AR technology, a computer technology is used to superimpose virtual information to the real world, and the virtual information is displayed through a mobile phone, a tablet computer, glasses, or another device, and is perceived by people, to implement integration of real and virtual information, enriching the real world. Briefly, real-world objects are given more information, enhancing three-dimensional sense, visual effect, and interaction experience.

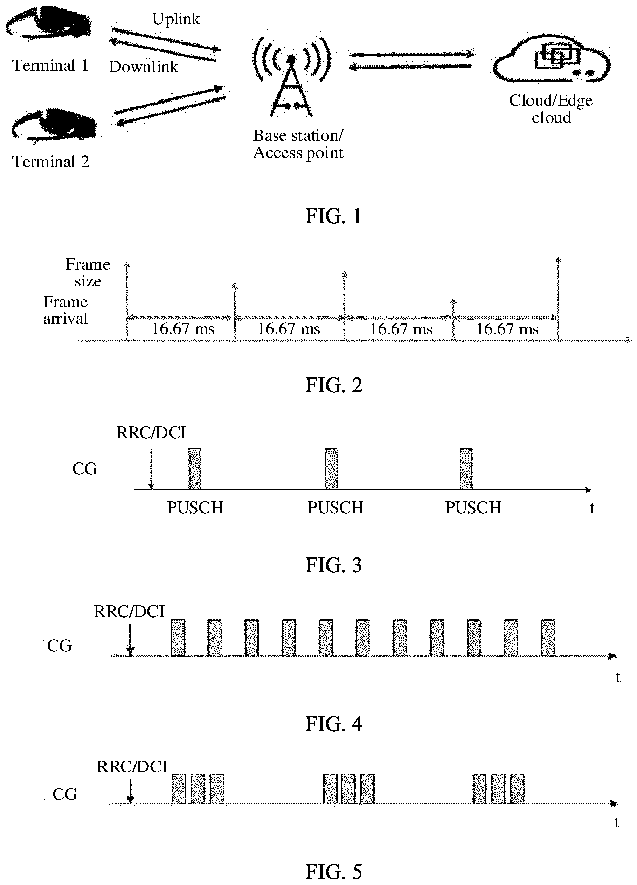

In the XR technology, cloud computing and cloud rendering technologies are introduced to XR service application (including AR service application and VR service application). With a high-speed and stable network, a display output, an audio output, and the like on a cloud are transmitted to a terminal after being encoded and compressed. In this way, XR service content can be migrated to the cloud and rendered to the cloud, and the terminal can be lightweight and mobile. FIG. 1 is a diagram of a communication network architecture in an XR technology. As shown in FIG. 1, a terminal of an XR service is connected to a network through a base station or another access point, and obtains the XR service from a cloud.

Service models of an XR transmission service and a video transmission service are usually that video frames periodically arrive based on frame rates. FIG. 2 is a diagram of a scenario of periodical transmission of a video frame. As shown in FIG. 2, ideally, one frame of picture arrives every 16.67 milliseconds for a video with a frame rate of 60 frames per second (frames per second, FPS). Amounts of data of an XR transmission service and a video transmission service are usually large. In addition, because different video frames have different compression ratios and different frame types, a size of each video frame changes greatly, that is, the size of each video frame usually changes dynamically.

Different XR services usually have different uplink and downlink service models. A display change of scene content of a VR service is caused by a posture or a location (action). Uplink transmission of the VR service is mainly for location and posture information of a terminal with a small amount of data which is usually only tens of kilobits per second (kilobits per second, kbps). Downlink transmission of the VR service is mainly for a rendered video stream with a large amount of data which can reach tens to hundreds of megabits per second (megabits per second, mbps). Different from that of the VR service, a display change of scene content of an AR service is caused by a change of a fixation focus target and a change of a spatial relationship (action) between a location and a fixation point. Uplink transmission of the AR service includes visual information (including a depth) required for perception. Therefore, uplink transmission is mainly for a clear and stable picture or video stream with a large amount of data, or may be for some extracted environment feature information. Generally, a network uplink rate required for initial experience of an interactive AR service is approximately 2 Mbit/s, and therefore a network uplink rate required for advanced experience is 10 Mbit/s to 20 Mbit/s. Therefore, compared with the VR service, the AR service has a higher requirement for an uplink transmission rate, making uplink transmission more challenging.

Currently, for a multimedia service (for example, the foregoing AR service, VR service, or video service) with high requirements on real-time performance and data capacity, uplink service data transmission is mainly performed through a physical uplink shared channel (physical uplink shared channel, PUSCH) configured by using a configured grant (configured grant, CG) mechanism. FIG. 3 is a diagram of a scenario of configuring a PUSCH by using a CG mechanism. As shown in FIG. 3, a CG means that in an uplink transmission process, a communication resource (including a time domain resource and a frequency domain resource) needs to be allocated to a terminal only once by using radio resource control (radio resource control, RRC) signaling or downlink control information (downlink control information, DCI), and then the terminal may periodically and repeatedly use a same time domain resource and frequency domain resource to perform uplink transmission. There are two types of CGs. Type 1 is to configure related parameters of CG transmission such as a CG periodicity, and a time domain resource and a frequency domain resource of the CG by using RRC and activate corresponding CG resources by using the RRC signaling. Type 2 is to configure a related parameter of CG transmission such as a CG periodicity by using RRC, and configure and activate a corresponding CG resource by using the DCI.

To increase an uplink service data transmission rate, denser PUSCHs may be configured to upload more service data. Specifically, the following several manners may be used for implementation.

FIG. 4 is a diagram of a scenario in which denser PUSCHs are configured. As shown in FIG. 4, duration of each CG periodicity may be shortened. In this case, in same duration, a quantity of PUSCHs on the CG increases.

FIG. 5 is a diagram of another scenario in which denser PUSCHs are configured. As shown in FIG. 5, a quantity of PUSCHs may be configured in a unit CG periodicity.

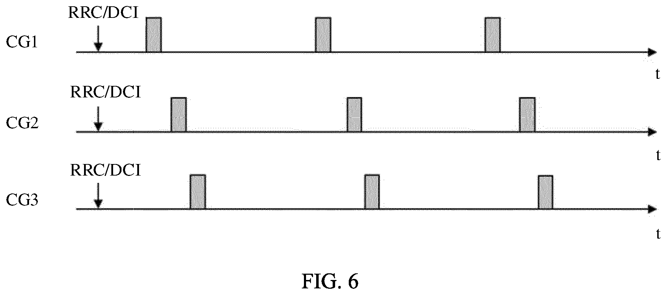

FIG. 6 is a diagram of another scenario in which denser PUSCHs are configured. As shown in FIG. 6, a plurality of CGs may be configured for a terminal. In this case, in unit duration, a plurality of PUSCHs from different CGs are used to perform uplink data transmission.

During actual application, an amount of service data on the terminal usually changes dynamically. In a high-density PUSCH communication condition, if an amount of uplink service data decreases, fewer PUSCHs are needed to perform service data transmission. Consequently, a large quantity of PUSCHs are not used, causing a waste of network resources.

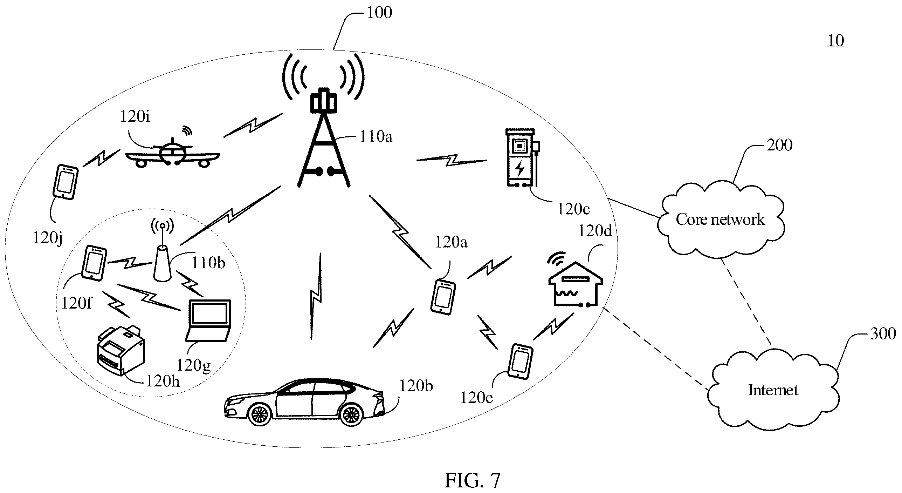

In view of this, this application discloses a configured grant processing method, a communication apparatus, and a computer-readable storage medium, to reduce a waste of communication resources and improve utilization of the communication resources. For ease of understanding, a possible and non-limiting system architecture of a configured grant processing method in this application is first described. FIG. 7 is a diagram of a possible and non-limiting system architecture of a configured grant processing method according to this application. As shown in FIG. 7, a communication system 10 includes a radio access network (radio access network, RAN) 100 and a core network (core network, CN) 200. The RAN 100 includes at least one RAN node (for example, 110a and 110b in FIG. 7, which are collectively referred to as 110) and at least one terminal (for example, 120a to 120j in FIG. 7, which are collectively referred to as 120). The RAN 100 may further include another RAN node, for example, a wireless relay device and/or a wireless backhaul device (not shown in FIG. 7). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as an access network device, a RAN entity, an access node, or the like, and is a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 7 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 7 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a sixth generation (6th generation, 6G) mobile communication system, a base station in a future mobile communication system, an access point in a Wi-Fi system, or the like. The RAN node may be a macro base station (for example, 110a in FIG. 7), a micro base station or an indoor base station (for example, 110b in FIG. 7), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a roadside unit (roadside unit, RSU). All or some functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In the communication system 10, the RAN node 110 and the terminal 120 may communicate with each other via a wireless network, a wired network, or a removable storage medium. The wireless network uses a standard communication technology and/or protocol. The wireless network is usually an internet (Internet), but may alternatively be any network, including but not limited to Bluetooth, a local area network (Local Area Network, LAN), a metropolitan area network (Metropolitan Area Network, MAN), a wide area network (Wide Area Network, WAN), a mobile network, a private network, or any combination of virtual private networks. In some application scenarios, a customized or dedicated data communication technology may be used to replace or supplement the foregoing data communication technology. The removable storage medium may be a universal serial bus (Universal Serial Bus, USB) flash memory, a removable hard disk, another removable storage medium, or the like. This is not limited in this application.

The following describes the configured grant processing method in this application from the perspective of interaction between the RAN node 110 and the terminal 120. It should be understood that the RAN node shown in FIG. 7 may alternatively be expressed differently, for example, "base station". For ease of description, in this application, unless otherwise specified, "base station" is used for description. During actual application, the technical solutions provided in this application are also applicable to another "RAN node" that is expressed differently or of a different type.

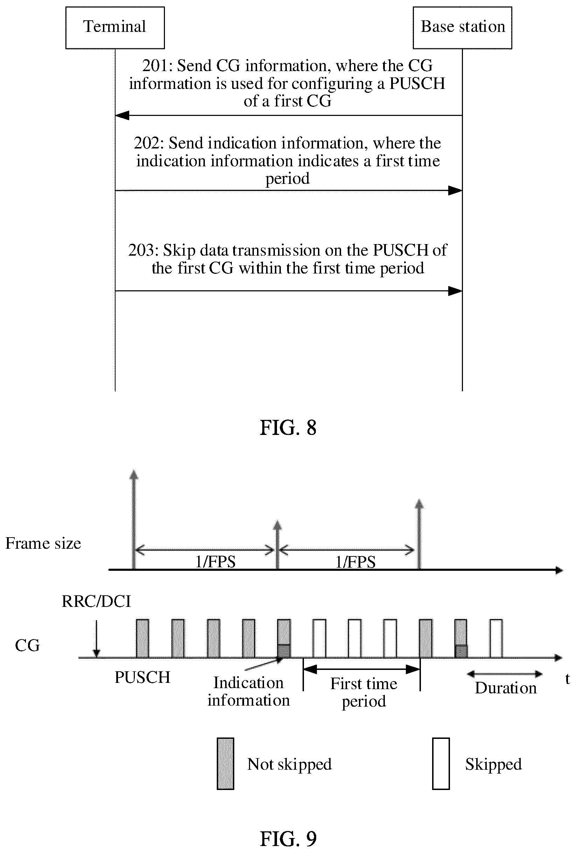

FIG. 8 is a schematic flowchart of a configured grant processing method according to this application. In FIG. 8, an example in which a base station and a terminal are used as execution entities of the interaction example is used for illustrating the method. However, the execution entities of the interaction example are not limited in this application. For example, the base station in FIG. 8 may alternatively be a chip, a chip system, or a processor that supports the base station in implementing the method, or may be a logical node, a logical module, or software that can implement all or some functions of the base station. The terminal in FIG. 8 may alternatively be a chip, a chip system, or a processor that supports the terminal in implementing the method, or may be a logical node, a logical module, or software that can implement all or some functions of the terminal. As shown in FIG. 8, the configured grant processing method in this application includes the following steps.

201: The base station sends CG information to the terminal.

During service communication between the base station and the terminal, the base station needs to first configure a CG for the terminal, so that uplink service data transmission on the terminal can be completed through a PUSCH on the CG that is allocated by the base station to the terminal. During actual application, the base station may estimate a duration periodicity and an amount of data of a service of the terminal based on service information of the terminal (including but not limited to a user service request, a quality of service (quality of service, QoS) flow establishment request, or other assistance information reported by the terminal), to determine a configuration parameter of the CG (including a first CG) that needs to be configured for the terminal, for example, a time domain resource, a frequency domain resource, a periodicity, and another parameter. After configuring the configuration parameter of the CG, the base station sends the CG information to the terminal, where the CG information is used for configuring a PUSCH of the first CG. After receiving the CG information, the terminal may transmit uplink data to the base station through the PUSCH on the first CG based on information indicated by the CG information, for example, a time domain resource, a frequency domain resource, and a periodicity. During actual application, the base station may configure one or more CGs for the terminal. Therefore, a quantity of first CGs is not limited in this application. In addition, to meet different data transmission amount requirements, there may be one or more PUSCHs in each periodicity of the first CG. This is not limited in this application.

202: The terminal sends indication information to the base station.

During actual application, an amount of service data on the terminal usually changes dynamically. For example, in some time periods or some periodicities, if the amount of service data on the terminal is small (even zero), or the terminal has another task with a higher priority to execute, the terminal may not need to transmit the uplink data to the base station in these time periods or these periodicities. Therefore, it also means that the terminal does not need to occupy the PUSCH to transmit the uplink data. In this application, the terminal may determine time periods or periodicities in which the terminal does not need to occupy the PUSCH to transmit the uplink data, and the time periods or periodicities in which the terminal does not need to occupy the PUSCH to transmit the uplink data are a first time period in this application. The terminal may send the indication information to the base station, where the indication information indicates the first time period.

After receiving the indication information from the terminal, the base station may determine, based on the first time period indicated by the indication information, PUSCHs that do not need to be used by the terminal, so that the PUSCHs that do not need to be used by the terminal are reallocated to another terminal for use, thereby improving resource utilization of the PUSCHs.

In this application, "sending information to A" may be understood as that a destination end of the information is A, and may include directly or indirectly sending the information to A. In addition, "receiving information that is from B" or "receiving information from B" may be understood as that a source end of the information is B, and may include directly or indirectly receiving the information from the terminal. Necessary processing, for example, format changing, may be performed on the information between the source end and the destination end of information sending. However, the destination end may understand valid information from the source end. Similar expressions in this application may be understood similarly, and details are not described again.

In this application, the indication information may indicate the first time period in a plurality of different content forms. The following separately describes the content forms.

In a possible implementation, the indication information sent by the terminal indicates duration of the first time period. However, when receiving the indication information, the base station may determine, when time domain currently used by the terminal device ends, that the duration of the first time period indicated by the indication information starts to take effect, so that an information length of the indication information is shortened, thereby improving efficiency of sending the indication information by the terminal.

In a possible implementation, in addition to indicating the duration of the first time period, the indication information sent by the terminal further indicates a start time of the first time period. When receiving the indication information, the base station needs to wait until the start time indicated by the indication information arrives, and then determines that the duration of the first time period indicated by the indication information starts to take effect, so that the first time period indicated by the indication information is more accurate and more flexible. For example, during actual application, the start time of the first time period in the indication information may be represented by "offset duration". Assuming that the offset duration in the indication information is 1 second, the base station determines, after 1 second since the base station receives the indication information, that the duration of the first time period indicated by the indication information starts to take effect.

In a possible implementation, the indication information sent by the terminal indicates the first CG. The base station may configure one or more CGs for the terminal. When the base station configures a plurality of CGs for the terminal, the terminal may want to skip uplink data transmission of only some of the CGs (that is, the first CG in this application) within the first time period. Therefore, the indication information sent by the terminal may carry byte content indicating the first CG. Therefore, after receiving the indication information, the base station learns that the terminal does not need to occupy, within the first time period, the PUSCH on the first CG to perform uplink data transmission, and the terminal still needs to use a PUSCH on a CG, other than the first CG, that is configured by the base station for the terminal. Therefore, the terminal can flexibly and freely select a CG that needs to be skipped, to improve flexibility of the solution. For example, the indication information may carry an index (index) of the first CG or an identifier of the first CG to indicate the first CG. In this case, after receiving the indication information, the base station determines, by using the index (index) of the first CG or the identifier of the first CG, that a CG on which the terminal wants to skip data transmission within the first time period is the first CG. For another example, the indication information does not carry the index (index) of the first CG or the identifier of the first CG. In this case, after receiving the indication information, the base station uses a CG on which a PUSCH used for sending the indication information is located as the first CG, or uses all CGs of the terminal as the first CG.

It should be understood that, in addition to the foregoing several content forms of the indication information, during actual application, the terminal may further indicate the first time period in another different content form. This is not limited in this application.

In a possible implementation, the indication information sent by the terminal is carried in uplink control information (uplink control information, UCI) or a medium access control (medium access control, MAC) control element (control element, CE), so that an existing communication protocol does not need to be extended or modified, thereby improving efficiency of sending the indication information by the terminal.

When the indication information is carried in the UCI, for example, the UCI includes three fields shown in the following Table 1, which are respectively n bits, m bits, and q bits, and respectively represents the duration of the first time period, the start time of the first time period, and index information of the first CG.

**Table 1**

| Field | Bitwidth |
|---|---|
| Duration of the first time period | n |
| Start time of the first time period | m |
| Index information of the first CG | q |

When the indication information is carried in the MAC CE, for example, the MAC CE includes three fields shown in Table 2 below, respectively representing the duration of the first time period, the start time of the first time period, and the index information of the first CG, where each field is of one byte (8 bits).

**Table 2**

| | |
|---|---|
| Duration of the first time period | oct1 |
| Start time of the first time period | oct2 |
| Index information of the first CG | oct3 |

203: The terminal skips data transmission on the PUSCH of the first CG within the first time period.

The terminal skips use of the PUSCH on the first CG within the first time period, that is, the terminal does not perform uplink data transmission through the PUSCH of the first CG. Within a time period other than the first time period, the terminal may still perform uplink data transmission through the PUSCH of the first CG.

In this application, when determining that uplink data transmission does not need to be performed through a PUSCH of a CG within the first time period, the terminal may feed back the first time period to the base station, to help the base station allocate and use PUSCH resources within the first time period, thereby reducing a waste of communication resources and improving utilization of the communication resources.

In a possible implementation, before selecting to skip the PUSCH of the first CG, the terminal first receives a response acknowledgment from the base station. Specifically, the terminal needs to receive first response information from the base station, to confirm that the base station allows the terminal to skip the PUSCH of the first CG within the first time period. In this way, behavior of the terminal can be consistent with behavior of the base station, to ensure that a skipped PUSCH resource can be recycled by the base station.

The configured grant processing method in this application is applicable to skipping PUSCHs in different scenarios. Examples are described below.

FIG. 9 is a diagram of a scenario in which the configured grant processing method is applied to a CG with a short periodicity according to this application. As shown in FIG. 9, because a skipped CG has a short periodicity, a quantity of skipped PUSCHs increases within the first time period.

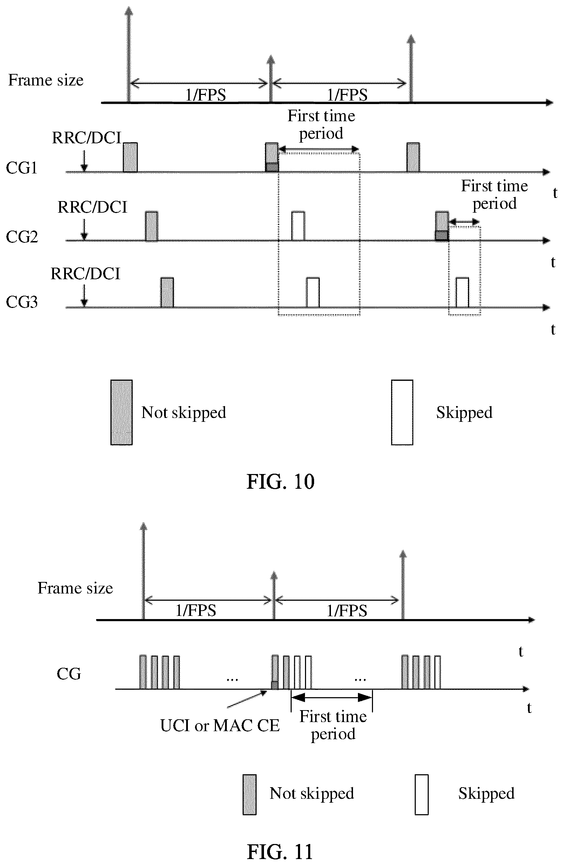

FIG. 10 is a diagram of a scenario in which the configured grant processing method is applied to a plurality of CGs according to this application. As shown in FIG. 10, PUSCHs of all CGs are skipped within the first time period.

FIG. 11 is a diagram of a scenario in which the configured grant processing method is applied to a plurality of PUSCHs configured within a periodicity according to this application. As shown in FIG. 11, all PUSCHs of a CG within the first time period are skipped.

In a possible implementation, the base station may send first configuration information corresponding to the first CG to the terminal, where the first configuration information configures that the PUSCH of the first CG is allowed to be skipped. The base station may first configure whether a CG is allowed to be skipped, and the terminal can skip a PUSCH on the CG within the first time period only when the CG is allowed to be skipped, to prevent a PUSCH used for some high-priority service data from being mistakenly skipped by the terminal, thereby avoiding affecting service running.

In a possible implementation, in addition to being used for configuring the PUSCH of the first CG, the CG information sent by the base station to the terminal is further used for configuring a PUSCH of a second CG. Therefore, the terminal selects to skip the PUSCH on the first CG within the first time period, that is, the terminal selects to skip only some CGs configured by the terminal, where the PUSCH on the second CG is not skipped. Therefore, the terminal may still perform data transmission on the PUSCH of the second CG within the first time period. The terminal may select to skip some CGs. Therefore, when some PUSCH resources are released, another PUSCH is still reserved for data transmission, to ensure normal service running.

In a possible implementation, the base station may send second configuration information corresponding to the second CG to the terminal, where the first configuration information configures that the PUSCH of the second CG is not allowed to be skipped. The base station may first configure whether a CG is allowed to be skipped. For a CG that is not allowed to be skipped, the terminal cannot skip the CG, to prevent a PUSCH used for some high-priority service data from being mistakenly skipped by the terminal, thereby avoiding affecting service running.

For example, during actual application, the base station may send the first configuration information and the second configuration information in this application to the terminal by using two different solutions. In other words, the base station may configure, by using two different solutions, whether a CG is allowed to be skipped. The following separately describes the two solutions.

Solution 1: The base station adds, to a configuration parameter of a CG configured for the terminal, one configuration parameter for the CG, for example, cg-puschSkipAllowed, to indicate whether the CG can be skipped. If the parameter is true, it indicates that the CG can be skipped. Otherwise, the CG cannot be skipped. Alternatively, one configuration parameter for the CG, for example, lch-puschSkipAllowed, is added to a configuration parameter of a logical channel, to indicate whether a PUSCH of the logical channel can be skipped. If the parameter is true, the PUSCH of the logical channel can be skipped. Otherwise, the PUSCH of the logical channel cannot be skipped.

Solution 2: The base station adds one configuration parameter, for example, cg-groupIndex, to an RRC configuration parameter, to group CGs configured for the terminal (for example, to group the CGs into the first CG that is allowed to be skipped and the second CG that is not allowed to be skipped). In this case, the indication information sent by the terminal to the base station is applicable only to skipping the first CG.

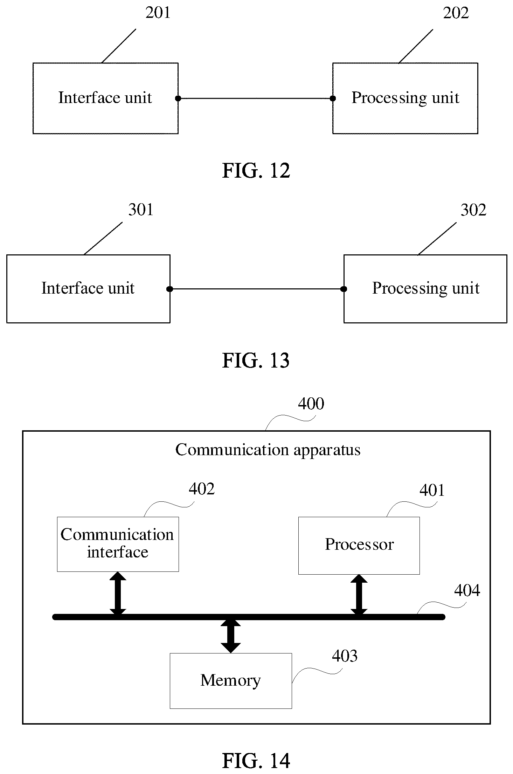

Next, to better implement the foregoing solutions in embodiments of this application, an embodiment of this application further provides a related apparatus configured to implement the foregoing solutions. Specifically, FIG. 12 is a diagram of a structure of a communication apparatus according to an embodiment of this application. The apparatus may be a terminal, or may be a component (for example, a processor, a chip, or a chip system) of the terminal, or may be a logical node, a logical module, or software that can implement all or some functions of the terminal. As shown in FIG. 12, the communication apparatus includes:
an interface unit 201, configured to obtain configured grant CG information, where the CG information is used for configuring a physical uplink shared channel PUSCH of a first CG, where
the interface unit 201 is further configured to send indication information, where the indication information indicates a first time period; and
a processing unit 202, where the processing unit controls the apparatus to skip data transmission on the PUSCH of the first CG within the first time period.

In a possible design, the indication information indicates duration of the first time period.

In a possible design, the indication information further indicates a start time of the first time period.

In a possible design, the indication information indicates the first CG.

In a possible design, the interface unit 201 is further configured to obtain first configuration information, where the first configuration information configures that the PUSCH of the first CG is allowed to be skipped.

In a possible design, the interface unit 201 is further configured to receive first response information, where the first response information indicates that the PUSCH of the first CG is allowed to be skipped within the first time period.

In a possible design, the CG information is further used for configuring a PUSCH of a second CG, and the interface unit 201 is further configured to perform data transmission on the PUSCH of the second CG within the first time period.

In a possible design, the interface unit 201 is further configured to obtain second configuration information, where the second configuration information configures that the PUSCH of the second CG is not allowed to be skipped.

In a possible design, the indication information is carried in uplink control information UCI or a medium access control MAC control element CE.

It should be noted that content such as information exchange and an execution process between the modules/units in the communication apparatus is based on the same concept as the method embodiment corresponding to FIG. 8 in this application. For specific content, refer to the descriptions in the foregoing method embodiments in this application. Details are not described herein again.

FIG. 13 is a diagram of another structure of a communication apparatus according to an embodiment of this application. The apparatus may be a base station, or may be a component (for example, a processor, a chip, or a chip system) of the base station, or may be a logical node, a logical module, or software that can implement all or some functions of the base station. As shown in FIG. 13, the communication apparatus includes:
an interface unit 301, configured to send configured grant CG information to a terminal, where the CG information is used for configuring a physical uplink shared channel PUSCH of a first CG, where
the interface unit 301 is further configured to receive indication information from the terminal, where the indication information indicates a first time period; and
a processing unit 302, configured to skip receiving data from the terminal on the PUSCH of the first CG within the first time period.

In a possible design, the indication information indicates duration of the first time period.

In a possible design, the indication information further indicates a start time of the first time period.

In a possible design, the indication information indicates the first CG.

In a possible design, the interface unit 301 is further configured to send first configuration information, where the first configuration information configures that the PUSCH of the first CG is allowed to be skipped.

In a possible design, the interface unit 301 is further configured to send first response information, where the first response information indicates that the PUSCH of the first CG is allowed to be skipped within the first time period.

In a possible design, the CG information is further used for configuring a PUSCH of a second CG, and the processing unit 302 is further configured to receive data from the terminal on the PUSCH of the second CG within the first time period.

In a possible design, the interface unit 301 is further configured to send second configuration information, where the second configuration information configures that the PUSCH of the second CG is not allowed to be skipped.

It should be noted that content such as information exchange and an execution process between the modules/units in the communication apparatus is based on the same concept as the method embodiment corresponding to FIG. 8 in this application. For specific content, refer to the descriptions in the foregoing method embodiments in this application. Details are not described herein again.

FIG. 14 is a diagram of a structure of a communication apparatus 400 according to this application. The communication apparatus 400 may be specifically a terminal in the foregoing embodiments, a component (such as a processor, a chip, or a chip system) of the terminal, or a logical node, a logical module, or software that can implement all or some functions of the terminal. Alternatively, the communication apparatus 400 may be specifically a base station in the foregoing embodiments, a component (such as a processor, a chip, or a chip system) of the base station, or a logical node, logical module, or software that implements all or some functions of the base station. FIG. 13 is a diagram of a possible logical structure of the communication apparatus 400. The communication apparatus 400 may include but is not limited to at least one processor 401 and a communication interface 402.

Further, optionally, the apparatus may include at least one of a memory 403 and a bus 404. In this embodiment of this application, the at least one processor 401 is configured to control an action of the communication apparatus 400.

In addition, the processor 401 may be a central processing unit, a general-purpose processor, a digital signal processor, an application-specific integrated circuit, a field programmable gate array or another programmable logic device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 400 shown in FIG. 13 may be specifically configured to implement the steps implemented by the terminal in the foregoing method embodiment, and implement technical effects corresponding to the terminal. Alternatively, the communication apparatus 400 may be specifically configured to implement the steps implemented by the base station in the foregoing method embodiment, and implement technical effects corresponding to the base station. For specific implementations of the communication apparatus shown in FIG. 12, refer to the descriptions in the foregoing method embodiments. Details are not described herein again.

An embodiment of this application further provides a computer program product including instructions. The computer program product may be software or a program product that includes instructions and that can run on a computing device or be stored in any usable medium. When the computer program product runs on at least one computer device, the at least one computer device is enabled to perform the method described in the embodiment shown in FIG. 8.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the method described in the embodiment shown in FIG. 8.

The apparatus provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the method described in the embodiment shown in FIG. 8. Optionally, the storage unit is a storage unit in the chip, for example, a register or a cache. Alternatively, the storage unit may be a storage unit in a wireless access device end but outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technologies may be implemented in the form of a software product. A computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, a network device, or the like) to perform the methods in various embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

## Claims

1. A communication method, comprising:
obtaining configured grant CG information, wherein the CG information is used for configuring a physical uplink shared channel PUSCH of a first CG;
sending indication information, wherein the indication information indicates a first time period; and
skipping data transmission on the PUSCH of the first CG within the first time period.

2. The method according to claim 1, wherein the indication information indicates duration of the first time period.

3. The method according to claim 2, wherein the indication information further indicates a start time of the first time period.

4. The method according to any one of claims 1 to 3, wherein the indication information indicates the first CG.

5. The method according to any one of claims 1 to 4, wherein the method further comprises:
obtaining first configuration information, wherein the first configuration information configures that the PUSCH of the first CG is allowed to be skipped.

6. The method according to any one of claims 1 to 5, wherein the method further comprises:
obtaining first response information, wherein the first response information indicates that the PUSCH of the first CG is allowed to be skipped within the first time period.

7. The method according to any one of claims 1 to 6, wherein the CG information is further used for configuring a PUSCH of a second CG, and the method further comprises:
performing data transmission on the PUSCH of the second CG within the first time period.

8. The method according to claim 7, wherein the method further comprises:
obtaining second configuration information, wherein the second configuration information configures that the PUSCH of the second CG is not allowed to be skipped.

9. The method according to any one of claims 1 to 8, wherein the indication information is carried in uplink control information UCI or a medium access control MAC control element CE.

10. A communication apparatus, comprising:
an interface unit, configured to obtain configured grant CG information, wherein the CG information is used for configuring a physical uplink shared channel PUSCH of a first CG, wherein
the interface unit is further configured to send indication information, wherein the indication information indicates a first time period; and
a processing unit, wherein the processing unit controls the apparatus to skip data transmission on the PUSCH of the first CG within the first time period.

11. The apparatus according to claim 10, wherein the indication information indicates duration of the first time period.

12. The apparatus according to claim 11, wherein the indication information further indicates a start time of the first time period.

13. The apparatus according to any one of claims 10 to 12, wherein the indication information indicates the first CG.

14. The apparatus according to any one of claims 10 to 13, wherein the interface unit is further configured to obtain first configuration information, wherein the first configuration information configures that the PUSCH of the first CG is allowed to be skipped.

15. The apparatus according to any one of claims 10 to 14, wherein the interface unit is further configured to obtain first response information, wherein the first response information indicates that the PUSCH of the first CG is allowed to be skipped within the first time period.

16. The apparatus according to any one of claims 10 to 15, wherein the CG information is further used for configuring a PUSCH of a second CG, and the interface unit is further configured to perform data transmission on the PUSCH of the second CG within the first time period.

17. The apparatus according to claim 16, wherein the interface unit is further configured to obtain second configuration information, wherein the second configuration information configures that the PUSCH of the second CG is not allowed to be skipped.

18. The apparatus according to any one of claims 10 to 17, wherein the indication information is carried in uplink control information UCI or a medium access control MAC control element CE.

19. A communication apparatus, comprising a processor, wherein the processor is coupled to a memory;
the memory is configured to store instructions; and
the processor is configured to execute the instructions in the memory, to enable the apparatus to perform the method according to any one of claims 1 to 9.

20. A computer-readable storage medium, wherein the computer-readable storage medium stores a computer program, and when the computer program is executed by a processor, the method according to any one of claims 1 to 9 is implemented.

21. A computer program product, wherein the computer program product stores computer-readable instructions, and when the computer-readable instructions are executed by a processor, the method according to any one of claims 1 to 9 is implemented.

22. A communication apparatus, wherein the apparatus comprises a unit configured to perform the method according to any one of claims 1 to 9.

23. A communication system, comprising the apparatus according to any one of claims 10 to 18, and a radio access network node.
